(19) Europäisches Patentamt
European Patent Office
Office européen des brevets

(11) Publication number: **0 353 776 B1**

(12) # EUROPEAN PATENT SPECIFICATION

(45) Date of publication of patent specification: **18.01.95**

(51) Int. Cl.6: **C08K 5/06**, C08K 5/09, C08K 5/07, C08L 69/00

(21) Application number: **89114481.8**

(22) Date of filing: **04.08.89**

(54) **Polycarbonate composition.**

(30) Priority: **04.08.88 JP 193488/88**
**12.10.88 JP 254873/88**

(43) Date of publication of application:
**07.02.90 Bulletin 90/06**

(45) Publication of the grant of the patent:
**18.01.95 Bulletin 95/03**

(84) Designated Contracting States:
**DE FR GB IT NL**

(56) References cited:
**US-A- 4 184 994**

(73) Proprietor: **Teijin Chemicals, Ltd.**
**1-6-21, Nishishinbashi**
**Minato-Ku**
**Tokyo (JP)**

(72) Inventor: **Kishimoto, Kazuo**
**403-6, Takaoka-cho**
**Matsuyama-shi**
**Ehime-ken (JP)**

(74) Representative: **Zumstein, Fritz, Dr. et al**
**Patentanwälte,**
**Dr. F. Zumstein,**
**Dipl.-Ing. F. Klingseisen,**
**Bräuhausstrasse 4**
**D-80331 München (DE)**

**EP 0 353 776 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a polycarbonate composition used for medical uses. More specifically, this invention relates to a polycarbonate composition which is less likely to be yellowed when it is subjected to a sterilization treatment with irradiation of gamma rays.

Polycarbonate is a resin having excellent transparency, sanitariness, dimensional stability and impact strength, which is broadly used in industrial fields, and as instruments and equipment for medical treatment as one field of such industrial fields. In general, when a substance is used for medical uses, it is subjected to a sterilization treatment prior to the uses. Heretofore, as such sterilization treatment, a treatment with ethylene oxide and a treatment with aqueous vapor in an autoclave, for example, have been carried out. Recently, however, a treatment with irradiation of gamma rays is generally used because it may be carried out in a dry state, at a low temperature and relatively cheaply.

However, polycarbonate has drawback in that it is yellowed by irradiation of gamma rays, and said drawback is similarly brought about regardless of a medium in which the irradiation is carried out, be it in the air, in vacuo or in the absence of oxygen. This yellowing not only degrades the appearance of instruments and equipment for medical use, but also, when, for example, blood is observed through the yellowed instruments or equipment, the blood looks darkish, resulting in giving an unpleasant feeling to the patient. Due to this, it is necessary to improve such yellowing to an admissible range.

It is known to impart anti-gamma rays property to polyolefin by adding thereto benzhydrol, a hydrocarbon oil, phthalic acid ester, hindered amine and pentaerythritol phosphite. However, it was not possible to decrease yellowing of polycarbonate even if it was added with pentaerythritol phosphite.

As the known means for advancing the anti-gamma rays property of polycarbonate, methods of blending polyethylene terephthalte ("Modern Plastics", January 1984), a boron compound (U.S. Patent 4,686,245) and polyetherpolyol or an alkyl ether thereof (European Patent 228,525) with polycarbonate, respectively were proposed, however, none of these methods has been commercialized yet.

Accordingly, an object of this invention is to improve the yellowing of polycarbonate caused by gamma rays with which it is irradiated.

As a result of assiduous investigations, the present inventor finds that by adding the specified compound in the specified amount to polycarbonate, this object is achieved.

Thus, according to this invention, there is provided a polycarbonate composition comprising 100 parts by weight of polycarbonate and 0.1 to 1 part by weight of at least one of compound selected from the group consisting of itaconic acid, itaconic anhydride, benzaldehyde dimethyl acetal, benzaldehyde propyleneglycol acetal and p-phthalaldehyde.

Polycarbonate used in this invention is obtained by a reaction of a divalent phenol with a carbonate precursor such as phosgene and diphenyl carbonate.

As such divalent phenol, there may be cited, for example, hydroquinone, dioxydiphenyl, bis-(hydroxyphenyl)methane, 1,2-bis(hydroxyphenyl)ethane, 2,2-bis(hydroxyphenyl)propane, 2,2-bis-(hydroxyphenyl)butane, 2,2-bis(hydroxyphenyl)hexane, 1,1-bis(hydroxyphenyl) cyclohexane, bis-(hydroxyphenyl)ether, bis(hydroxyphenyl)ketone, bis(hydroxyphenyl)sulfide, bis(hydroxyphenyl)sulfone, alpha, alpha′-bis(hydroxyphenyl)diisopropylbenzene and nucleus substitution products of the lower alkyls thereof. A part of phosgene may be substituted by terephthalic acid chloride and isophthalic acid chloride. Polycarbonate used in this invention may be a homopolymer, a copolymer or a mixture thereof, and may have a branched structure.

Compounds that should be blended with polycarbonate as anti-yellowing agents are itaconic acid, itaconic anhydride, benzaldehyde dimethyl acetal

( 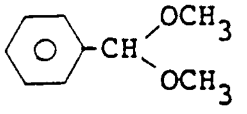 ),

benzaldehyde propyleneglycol acetal

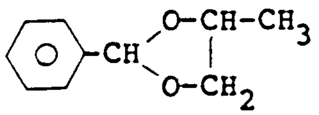

and p-phthaladehyde, which may be used singly or in combination. Of these compounds, especially benzaldehyde propyleneglycol acetal and itaconic acid are preferable. The blending amount is per 100 parts by weight of polycarbonate, 0.1 to 1.0 part by weight, preferably 0.3 to 0.7 part by weight. If the blending amount is less than 0.1 part by weight, the effect aimed at cannot be obtained, and if the blending amount exceeds 1.0 part by weight, the heat resistance at the time of molding becomes inferior, resulting in the poor appearance of the resulting molded article.

As a method of uniformly mixing the aforesaid compound with polycarbonate, an optional method may be properly adopted. For example, a method of mixing the two in a tumbler or a Henschel's mixer and then pelletizing the resulting mixture by an extruder or a method of quantitatively projecting the two into the hopper of an extruder by a feeder and then pelletizing the resulting mixture may be adopted. The resulting pellets are molded into medical instruments, medical equipment and the parts thereof by ordinary methods such as injection molding, extrusion molding, compression molding and blow molding.

As required, the composition of this invention may be further blended with a mold releasing agent, a stabilizer, an antioxidant and a coloring agent such as a pigment.

Medical instruments, medical equipment and the parts thereof produced from the composition of this invention have a small degree of yellowing (ΔY1) of less than 10 at irradiation of gamma rays of 2.5 megarads (MR) that are sufficient amount of irradiation for sterilization. Accordingly, when blood of a patient is put in, for example, a medical instrument produced from the composition of this invention treated with irradition of gamma rays, the blood does not look darkish, and does not give an unpleasant feeling to the patient as a result.

Hereinbelow, this invention will be explained by way of examples. All parts appearing in the following examples are by weight.

Examples 1 to 5 and Comparative Example

One hundred parts of polycarbonate ("Panlite L-1225" proudced by Teijin Chemicals, Ltd.) was blended with various anti-yellowing agents (yellowing inhibitors) described in Table 1 in amounts described in the same table.

Each of the resulting blends (mixtures) was extruded at 280 °C by an extruder to be pelletized. The resulting pellets were molded at 340 °C by injection molding to obtain a 45 x 50 x 2 mm transparent plate. The resulting transparent plate was irradiated with 2.5 megarads (MR) of cobalt 60 gamma rays. The degrees of yellow color Y1 of the transparent plate before and after the irradiation were measured according to JIS K7103, and from the measured values of said degrees, the degree of yellowing (ΔY1) was sought.

The results are shown in Table 1.

Table 1

| | Anti-yellowing agent (Yellowing inhibitor) | | ΔY1 |
|---|---|---|---|
| | Kind | Amount added | |
| Example 1 | Itaconic acid | 0.3 part | 8.3 |
| Example 2 | Itaconic anhydride | 0.5 part | 5.4 |
| Example 3 | Benzaldehyde dimethyl acetal | 0.5 part | 5.8 |
| Example 4 | Benzaldehyde propyleneglycol acetal | 0.5 part | 5.7 |
| Example 5 | p-Phthalaldehyde | 0.5 part | 5.7 |
| Comparative Example | Non-addition | - | 14.6 |

## Claims

1. A polycarbonate composition comprising 100 parts by weight of polycarbonate and 0.1 to 1.0 part by weight of at least one of compounds selected from the group consisting of itaconic acid, itaconic anhydride,

( 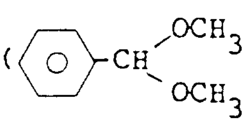 ),

benzaldehyde dimethyl acetal benzaldehyde propyleneglycol acetal

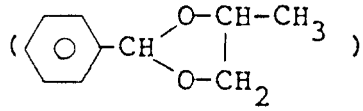

and p-phthalaldehyde.

2. The polycarbonate composition of claim 1 comprising 100 parts by weight of polycarbonate and 0.3 to 0.7 part by weight of at least one kind of said compounds.

3. The polycarbonate composition of claim 1 or 2 which is in the form of pellets.

4. The use of a polycarbonate composition according to the claims 1 to 3 for medical applications.

**Patentansprüche**

1. Polycarbonatzusammensetzung, enthaltend 100 Gew.-Teile Polycarbonat und 0,1 bis 1,0 Gew.Teile zumindest einer der Verbindungen, ausgewählt unter Itaconsäure, Itaconsäureanhydrid, Benzaldehyddimethylacetal

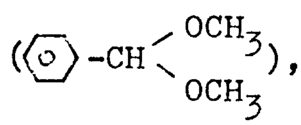

Benzaldehydpropylenglykolacetal

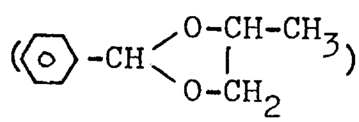

und p-Phthalaldehyd.

2. Polycarbonatzusammensetzung gemäß Anspruch 1, enthaltend 100 Gew.Teile Polycarbonat und 0,3 bis 0,7 Gew.-Teile zumindest einer Art der besagten Verbindungen.

3. Polycarbonatzusammensetzung gemäß Anspruch 1 oder 2 in Form von Pellets.

4. Verwendung einer Polycarbonatzusammensetzung entsprechend den Ansprüchen 1 bis 3 für medizinische Anwendungen.

**Revendications**

1. Composition de polycarbonate comprenant 100 parties en poids de polycarbonate et 0,1 à 1,0 partie en poids d'au moins un des composés choisis dans le groupe constitué par l'acide itaconique, l'anhydride itaconique. benzaldéhyde-diméthyl-acétal

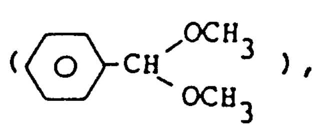

benzaldéhyde-propylèneglycol-acétal

( 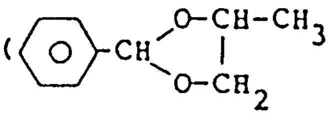 ),

et p-phtalaldéhyde.

2. Composition de polycarbonate selon la revendication 1, comprenant 100 parties en poids de polycarbonate et 0,3 à 0,7 partie en poids d'au moins un de ces composés.

3. Composition de polycarbonate selon la revendication 1 ou 2 qui se présente sous forme de pastilles.

4. Utilisation d'une composition de polycarbonate selon la revendication 1 à 3 pour les applications médicales.